# FASCICULE DE BREVET EUROPEEN

(11) **EP 3 206 192 B1**
(45) Date de publication et mention de la délivrance du brevet: **19.11.2025**
(21) Numéro de dépôt: 17155565.9
(22) Date de dépôt: 10.02.2017
(51) Int. Cl.: G07D 7/004, G07D 7/00, G07D 7/20

(54) **PROCÉDÉ DE SÉCURISATION ET DE VERIFICATION D'UN DOCUMENT**
VERFAHREN ZUR SICHERUNG UND ÜBERPRÜFUNG EINES DOKUMENTS
METHOD FOR SECURING AND VERIFYING A DOCUMENT

(30) Priorité: 11.02.2016 FR 1651105
(43) Date de publication de la demande: 16.08.2017
(73) Titulaire: Idemia Identity & Security France, 92400 Courbevoie (FR)
(72) Inventeur: CHABANNE, Hervé, 92130 Issy-les-Moulineaux (FR); FONDEUR, Jean-Christophe, 92130 Issy-les-Moulineaux (FR); GENTRIC, Stéphane, 92130 Issy-les-Moulineaux (FR); VAN DIJK, Erik, 92130 Issy-les-Moulineaux (FR)
(74) Mandataire: Santarelli

(56) Documents cités:
- EP-A1- 1 139 302
- EP-A1- 2 290 619
- AU-A1- 2014 289 869
- US-A1- 2007 237 354
- US-A1- 2008 294 900
- TURK M A ET AL: "Face recognition using eigenfaces", PROCEEDINGS OF THE COMPUTER SOCIETY CONFERENCE ON COMPUTER VISION AND PATTERN RECOGNITION. LAHAINA, MAUI, HAWAII, JUNE 3 - 6, 1991; [PROCEEDINGS OF THE COMPUTER SOCIETY CONFERENCE ON COMPUTER VISION AND PATTERN RECOGNITION], LOS ALAMITOS, IEEE. COMP., vol. -, 3 June 1991 (1991-06-03), pages 586 - 591, XP010023267, ISBN: 978-0-8186-2148-2, DOI: 10.1109/CVPR.1991.139758
- ROSS BEVERIDGE J ET AL: "The CSU Face Identification Evaluation System; Its purpose, features, and structure", MACHINE VISION AND APPLICATIONS, SPRINGER, BERLIN, DE, vol. 16, no. 2, 1 February 2005 (2005-02-01), pages 128 - 138, XP019323885, ISSN: 1432-1769, DOI: 10.1007/S00138-004-0144-7
- YI SUN ET AL: "Deep Learning Face Representation by Joint Identification-Verification", 18 June 2014 (2014-06-18), XP055352763, Retrieved from the Internet <URL:http://papers.nips.cc/paper/5416-deep-learning-face-representation-by-joint-identification-verification.pdf> [retrieved on 20201204]
- FLORIAN SCHROFF ET AL: "FaceNet: A unified embedding for face recognition and clustering", PROCEEDINGS OF THE IEEE CONFERENCE ON COMPUTER VISION AND PATTERN RECOGNITION (CVPR), vol. 1503.03832v3, 17 June 2015 (2015-06-17), pages 1 - 10, XP055531522, ISBN: 978-1-4673-6964-0, DOI: 10.1109/CVPR.2015.7298682
- MATTHIEU GUILLAUMIN ET AL: "Is that you? Metric learning approaches for face identification", COMPUTER VISION, 2009 IEEE 12TH INTERNATIONAL CONFERENCE ON, IEEE, PISCATAWAY, NJ, USA, 29 September 2009 (2009-09-29), pages 498 - 505, XP031672548, ISBN: 978-1-4244-4420-5

## Description

### DOMAINE DE L'INVENTION

L'invention concerne le domaine de la sécurisation de documents comprenant au moins un élément visuel. Les documents peuvent notamment être des documents d'identité de type par exemple carte d'identité, permis de conduire, acte de naissance ou passeport ou bien encore tout « document électronique » (type documents personnels et/ou d'identité) pouvant être hébergé sur un smartphone ou autre dispositif portable disposant de moyens d'affichage. L'invention concerne également la vérification de l'intégrité de tels documents une fois sécurisés.

### ETAT DE LA TECHNIQUE

Des services de sécurité nationaux ont découvert des fraudes menées sur des documents d'identité, dans lesquelles un document authentique pourvu d'une photographie d'identité originale a été falsifié, en remplaçant la photographie par la photographie d'une personne différente. De ce fait l'utilisateur du document falsifié peut usurper l'identité de la personne à qui le document d'identité a été délivré initialement.

Dans un contexte plus général, les exigences imposées en termes de sûreté aux organismes concevant et délivrant des documents d'identité sont de plus en plus strictes. Le document US 2007/237354 A1 divulgue un algorithme de sécurisation d'un document comprenant la génération d'une donnée de sécurité à partir d'une image du document.

Le document YI SUN et al., "Deep Learning Face Representation by Joint Identification-Verification", arXiv:1406.4773v1 [cs.CV], (20140618) concerne un algorithme d'identification de visages utilisant un apprentissage profond.

Le document FLORIAN SCHROFF et al., "FaceNet: A Unified Embedding for Face Recognition and Clustering", arXiv:1503.03832v3 [cs.CV] Proceedings of the IEEE Conference on Computer Vision and Pattern Recognition (CVPR), (20150617), pages 1 - 10 concerne un algorithme d'identification de visages, effectuant un mapping des images des visages vers un espace Euclidien où les distances correspondent directement à une mesure de similarité des visages.

Le document MATTHIEU GUILLAUMIN et al., "Is that you? Metric Learning Approaches for Face Identification", IEEE 12th International Conference on Computer Vision, (20090929), pages 498 - 505 concerne des méthodes d'apprentissage de mesure de distance pour identifier des visages.

### PRESENTATION DE L'INVENTION

Un but de l'invention est de proposer un procédé de sécurisation d'un document, notamment d'un document d'identité, permettant de garantir notamment l'intégrité d'éléments visuels du document tels que des photographies.

Un autre but de l'invention est de proposer un procédé de vérification de l'intégrité d'un document sécurisé par le procédé proposé.

Un autre but de l'invention est d'assurer que le procédé de vérification de l'intégrité du document soit robuste aux variations subies par le document liées à son utilisation, ses conditions d'utilisation, etc.

A cet égard, l'invention a pour objet un procédé de sécurisation suivant la revendication 1.

Les revendications 2 à 10 concernent des modes de réalisation du procédé de sécurisation.

L'invention a également pour objet un produit programme d'ordinateur suivant la revendication 11.

L'invention a également pour objet un document sécurisé suivant la revendication 12..

L'invention a également pour objet un procédé de vérification de l'intégrité d'un document sécurisé suivant la revendication 13.

La revendication 14 concerne un mode de réalisation du procédé de vérification.

L'invention a enfin pour objet un système de vérification d'un document suivant la revendication 15.

Le procédé proposé permet de garantir l'intégrité d'un élément visuel d'un document tel qu'une photographie, ou encore une chaîne de caractères, une signature, etc. En effet, à chaque élément visuel est attribuée une donnée de sécurité de référence, qui est obtenue par un algorithme configuré pour que la donnée obtenue soit globalement la même pour toutes les images d'un même élément visuel, quelles que soient les conditions d'acquisition des images ou l'usure de l'élément, et qui soit différente pour des images d'un élément visuel différent.

Pour cela, l'algorithme est entrainé sur une base de données d'apprentissage.

Pour renforcer encore la sécurité du document, l'intégrité de la donnée de sécurité de référence peut être garantie au moyen d'un algorithme de signature à clé publique ou d'un algorithme de codage dit secure sketch. Ainsi, la donnée de sécurité ne peut pas être falsifiée par l'individu porteur du document.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
- Les figures 1a et 1b représentent schématiquement un système de traitement pour sécuriser un document et un système pour vérifier l'intégrité d'un document.
- La figure 2 représente schématiquement les principales étapes d'un procédé de sécurisation d'un document,
- La figue 3 représente schématiquement les principales étapes d'un procédé de vérification de l'intégrité d'un document.

### DESCRIPTION DETAILLEE D'AU MOINS UN MODE DE REALISATION DE L'INVENTION

### Sécurisation d'un document

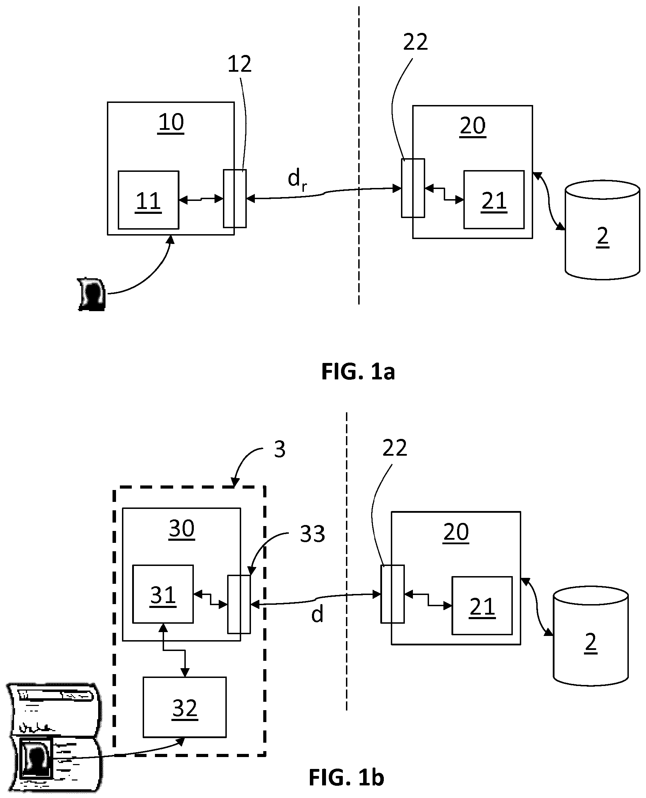

En référence à la figure 1a, on a représenté un système de traitement permettant de sécuriser un document, par exemple un document d'identité tel qu'un passeport, une carte d'identité, etc. Le type de document n'est pas limité à un document d'identité, mais pourrait également concerner des documents pour jouer, par exemple une carte à puce personnelle pour jouer au casino, etc. Le document peut être tout « document électronique » (type documents personnels et/ou d'identité) pouvant être hébergé sur un smartphone ou autre dispositifs portables, et comprenant des moyens d'affichage, par exemple un écran.

Ce système comprend une unité de traitement 10, par exemple un ordinateur ou un serveur, disposant de moyens de traitement 11 adapté pour exécuter un algorithme qui sera décrit plus en détails ci-après. Les moyens de traitement 11 peuvent par exemple être un calculateur de type processeur, microprocesseur, microcontrôleur, etc.

L'unité de traitement 10 peut également être adaptée pour mettre en œuvre des algorithmes cryptographiques, par exemple de type algorithme de signature à clé publique ou de type « secure sketch » évoqué plus en détails ci-après.

L'unité de traitement 10 et les moyens de traitement 11 sont opérés par une entité considérée non frauduleuse, typiquement un gouvernement dans le cas où le document est un document d'identité.

Avantageusement, le système peut également comprendre une base de données 2, ainsi qu'une unité de traitement 20 gestionnaire de la base de données. L'unité de traitement peut également être un ordinateur ou un serveur, disposant de moyens de traitement 21, par exemple un calculateur de type processeur, microprocesseur, microntrôleur, etc., permettant à l'unité de traitement d'accéder à la base de données en lecture et en écriture.

Les deux unités de traitement 10, 20 comprennent avantageusement des interfaces de communication 12, 22 à distance pour l'envoi et la réception de données, par exemple par Internet sans fil, signal radiofréquence, etc.

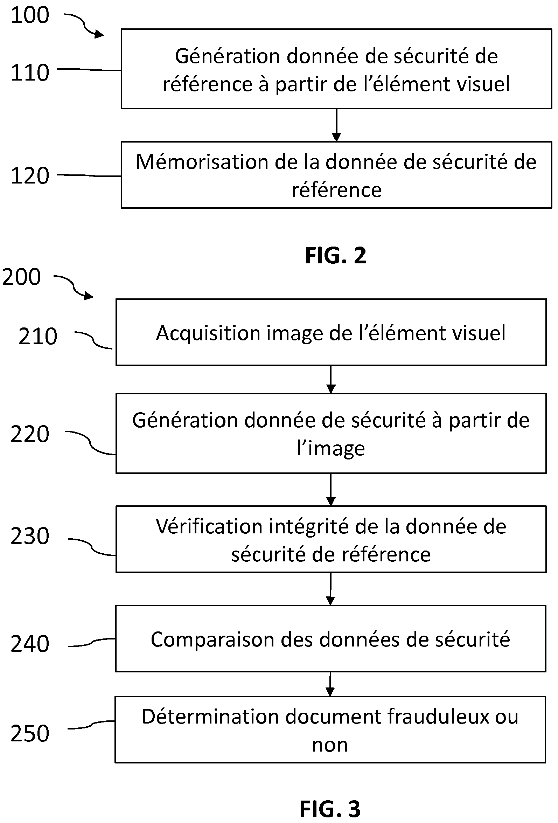

En référence à la figure 2, un procédé 100 de sécurisation d'un document comprend la sécurisation d'un élément visuel figurant sur le document.

Cet élément visuel est une image comprenant des données pertinentes lors de l'utilisation du document. Dans le cas d'un document d'identité, l'élément visuel est une image comporte des données liées à l'individu à qui est délivré le document d'identité. Avantageusement, il s'agit une photographie d'identité, c'est-à-dire une photographie représentant un signe distinctif de l'individu à qui le document a été délivré, typiquement son visage. Alternativement, l'élément visuel peut également être une image d'un autre signe distinctif de l'individu, par exemple une signature manuscrite.

L'élément visuel peut aussi être la représentation sur le document d'un ensemble de signes liés à l'identité de l'individu, par exemple une chaîne de caractères (nom, prénom, date de naissance, etc.).

Selon une autre variante, l'élément visuel peut être le document tout entier, par exemple dans le cas où le document utilisé est électronique et qu'il est affiché sur un écran de dispositif électronique tel qu'une tablette ou un téléphone mobile.

La sécurisation de l'élément visuel est de préférence mise en œuvre lors de la création du document, afin de garantir que l'élément visuel est authentique.

La sécurisation de l'élément visuel comprend la génération 110, par l'unité de traitement 10, à partir de l'élément visuel, d'une donnée de sécurité dite de référence dᵣ. Cette donnée prend avantageusement la forme d'une séquence de bits, d'une longueur de quelques octets à quelques dizaines d'octets.

Si l'élément visuel est une image numérique insérée dans le document lors de sa fabrication, l'étape 110 est mise en œuvre directement sur l'élément. Alternativement, l'étape 110 peut être mise en œuvre sur une image de l'élément visuel capturée sur le document à l'aide d'un capteur numérique d'image approprié (non représenté).

L'élément visuel peut être traité avant de générer la donnée de sécurité de référence. Il peut être avantageusement recalé par rapport à un référentiel, soit en réalisant un alignement, soit en cherchant à faire correspondre des points particuliers, par exemple en utilisant la méthode SIFT. Puis l'élément visuel peut être normalisé par exemple par la méthode d'égalisation d'histogrammes.

La donnée de sécurité de référence dᵣ est obtenue, à partir de l'élément visuel, par l'exécution d'un algorithme qui est configuré pour obtenir des propriétés recherchées pour la donnée de sécurité de référence.

Une première propriété est la suivante :
- Des images acquises d'un même élément visuel, quelles que soient les conditions d'acquisition, doivent conduire à l'obtention, par l'algorithme, de données de sécurité sensiblement identiques.

Dans toute la suite, on entend par « données de sécurité sensiblement identiques » des données de sécurité présentant entre elles des différences inférieures à un seuil déterminé. La quantité de différences entre deux données de sécurité peut être évaluée de manière connue en utilisant une métrique adaptée, par exemple en calculant une distance entre les données, comme par exemple la distance euclidienne ou la distance de Hamming. La valeur du seuil dépend de la nature de la fonction calculée.

Les conditions d'acquisition de l'image de l'élément visuel regroupent à la fois :
- des aléas liés aux conditions de l'acquisition elle-même avec un capteur d'image, par exemple les conditions d'éclairage, les paramètres du capteur d'image, la distance de l'élément visuel par rapport au capteur, etc., ainsi que :
- des aléas liés à l'apparence de l'élément visuel, comme par exemple une variation d'aspect du document provenant de son vieillissement, un jaunissement d'une photographie, l'apparition de rayures ou de marques, ou encore une variation d'aspect lié à des ajouts apportés pour accroître la sécurité du document : présence sur une partie de l'élément d'un tampon, d'un hologramme, etc.

En particulier, une donnée de sécurité obtenue à partir d'une image du même élément visuel que celui à partir duquel est obtenue la donnée de sécurité de référence doit être sensiblement identique à cette dernière.

Une autre propriété est la suivante :
- Des images acquises d'éléments visuels différents doivent conduire à l'obtention, par l'algorithme, de données de sécurité sensiblement différentes.

Dans toute la suite, on entend par « données de sécurité sensiblement différentes », des données de sécurité présentant entre elles des différences supérieures au seuil précédemment évoqué.

En particulier, une donnée de sécurité obtenue à partir d'une image d'un élément visuel différent de celui à partir duquel est obtenue la donnée de sécurité de référence dᵣ, doit être sensiblement différente à la donnée de sécurité de référence.

En outre, dans le cas où l'élément visuel du document est une photographie d'un individu, la donnée de sécurité doit être sensiblement la même que la donnée de sécurité de référence dᵣ (c'est-à-dire présenter des différences inférieures à un certain seuil) pour toutes les images prises de la même photographie du même individu.

En revanche, une donnée de sécurité doit être sensiblement différente de la donnée de sécurité de référence dᵣ si elle est obtenue à partir de toute autre photographie du même individu, ou de toute photographie d'un autre individu.

Pour obtenir ces propriétés, l'algorithme est entrainé, c'est-à-dire paramétré sur une base de données d'apprentissage (non représentée) contenant un ensemble d'images. Lors de cet entrainement, l'algorithme est exécuté sur un grand nombre de paires d'images, et des indications lui sont fournies sur celles qui doivent résulter en des données de sécurité sensiblement identiques (typiquement la même image capturée à des instants et/ou dans des conditions différentes, par exemple lorsque l'image est détériorée par le temps, les frottements, le jaunissement et/ou que lors de l'acquisition, la luminosité, l'angle, etc. ne sont pas les mêmes), et sur d'autres paires d'images qui doivent résulter en des données de sécurité sensiblement différentes (typiquement lorsque la paire comporte deux images différentes d'un même objet ou d'objets différents mais de même nature, plus particulièrement lorsque la paire comporte deux images différentes soit d'individus différents (ou autre objets), soit d'un même individu (ou objet), par exemple dans le cas où l'autre image a été prise à des moments différents et/ou dans des conditions différentes).

La valeur du seuil permettant d'établir une classification entre des données sensiblement identiques et des données sensiblement différentes est déterminée par l'algorithme à l'issue de son apprentissage.

Avantageusement, la base de données d'apprentissage comporte le plus d'images possibles, par exemple au moins 10000 images, et de préférence au moins un million, car plus la base de données comporte d'images et plus l'apprentissage sur cette base de données augmente la fiabilité de l'algorithme.

L'algorithme de classification choisi pour générer la donnée de sécurité à partir d'une image est un algorithme de classification du type employant un réseau de neurones convolutionnel également connu sous l'acronyme CNN (pour l'anglais Convolutional Neural Network).

De manière connue de l'Homme du métier, un réseau de neurones convolutionnel comporte une structure formée par une succession d'opérations mises en œuvre sur une donnée d'entrée (en l'occurrence une image), les opérations comprenant des opérations linéaires de type convolution, dont le résultat est pondéré par un facteur de pondération, ainsi que des opérations non linéaires, par exemple seuillage, etc.

L'ajustement de l'algorithme lors de l'apprentissage revient à ajuster les valeurs des facteurs de pondération.

Un exemple de structure de réseau de neurones convolutionnel applicable à la génération d'une donnée de sécurité à partir d'une image est celle qui est détaillée pour le réseau F1 du document de Y. Sun et al., « Deep Convolutional Network Cascade for Facial Point Detection », Proceedings of IEEE Conference on Computer Vision and Pattern Recognition (CVPR), 2013.

Le mode d'apprentissages des paramètres de l'algorithme CNN, de sorte qu'il génère deux données de sécurité différentes à partir d'images différentes d'une même personne, ainsi que la présence d'opérations non linéaires dans la génération de la donnée à partir de l'élément visuel, empêche la reconstitution de l'image à partir de la donnée de sécurité et préserve ainsi la confidentialité des données contenues dans l'image sur l'individu.

Dans ce mode de réalisation, le paramétrage de l'algorithme sur la base de données d'apprentissage pour satisfaire les deux propriétés détaillées ci-avant sur les conditions de similarité et de dissimilarité des données de sécurié, comprend l'ajustement des paramètres liés aux prétraitements, à la taille des zones choisies, au nombre de gradient par zone, au type de filtres utilisés pour calculer les gradients, à la nature de la réduction d'espace choisie, etc.

L'utilisation d'un tel algorithme, qui élimine la localisation des informations sur l'image, permet également de garantir la confidentialité des éléments visuels en empêchant de reconstituer un élément visuel à partir d'une donnée de sécurité correspondante.

Préférablement, dans le cas d'un élément visuel comprenant une information biométrique (telle qu'une photographie), les algorithmes précités ne cherchent pas à reconnaitre la personne présente sur l'élément visuel, comme cela est souvent recherché en identification biométrique, mais uniquement à savoir si l'élément visuel est authentique. Par conséquent, cela signifie que leur mise en œuvre n'implique pas l'identification de la personne possédant le document. C'est pourquoi un document comprenant un autre élément visuel représentant la personne présente sur l'élément visuel de référence (typiquement une autre photographie représentant la même personne que celle présente sur la photographie de référence) sera considéré comme frauduleux après vérification, alors qu'elle conduirait à une authentification ou en identification biométrique.

Une fois la donnée de sécurité de référence dᵣ obtenue pour l'élément visuel du document, cette donnée est mémorisée lors d'une étape 120.

Elle peut être mémorisée dans le document lui-même. Par exemple, elle peut être stockée en mémoire dans une puce électronique intégrée dans le document.

Alternativement, elle peut être imprimée sur le document, de manière visible ou non, c'est-à-dire par exemple en filigrane, sous la forme d'un code-barres, etc.

Alternativement, elle peut être collée, déposée ou gravée sur le document, de sorte qu'il y ait un affichage physique.

Dans les deux alternatives précédentes, la donnée de référence peut alors être visible ou invisible (à l'instar des « digital watermark » connues).

On parle plus généralement d'affichage.

Cependant, la donnée de sécurité de référence dᵣ est de préférence mémorisée dans une base de données 2 gérée par une unité de traitement 20 gestionnaire, qui peut ainsi être fiable, par exemple dépendante d'un organisme étatique. Ceci limite les possibilités d'accès, par un individu malveillant ou par le détenteur du document lui-même à la donnée stockée dans le document.

Dans ce cas, l'unité de traitement 10 communique la donnée de sécurité de référence à l'unité de traitement 20 qui la stocke dans la base. Cette communication peut être mise en œuvre sur un canal sécurisé et/ou au moyen d'un protocole cryptographique pour assurer la confidentialité de la donnée.

En outre, et quel que soit le support de stockage de la donnée de sécurité, l'intégrité de cette donnée de sécurité est de préférence elle-même garantie.

Par exemple, la donnée de sécurité peut être signée par l'unité de traitement 10 qui a généré la donnée de sécurité, par exemple au moyen d'un algorithme de signature à clé publique, utilisant classiquement une clé privée qui est détenue par l'unité 20, et une clé publique.

En variante, l'intégrité de la donnée de sécurité peut être garantie au moyen d'un algorithme de type secure sketch, c'est-à-dire un algorithme de codage basé sur l'utilisation d'un code correcteur d'erreur, qui comprend la mise en œuvre, par l'unité de traitement 10, des étapes consistant à :
- Binariser le cas échéant la donnée de sécurité pour obtenir une donnée b,
- A partir d'un mot c d'un code correcteur d'erreur, obtenir à partir de la référence un résultat tel que r = [c XOR b, h(c)], où XOR est la fonction « ou exclusif », et h est une fonction de hashage cryptographique, par exemple de type SHA-256, et enregistrer le résultat r avec la donnée de sécurité, soit dans le document, soit dans la base de données 2.

### Vérification de l'intégrité d'un document

En référence à la figure 1b, on a représenté un système de vérification 3 de l'intégrité d'un document. La vérification peut avoir lieu par exemple lors d'un contrôle du document, ou d'un contrôle de l'identité d'un individu dans le cas où le document est un document d'identité de l'individu.

Le système de vérification 3 comprend avantageusement une unité de traitement 30, comprenant des moyens de traitement 31 comme un calculateur, par exemple de type processeur, microprocesseur, microcontrôleur, etc.

Les moyens de traitement 31 sont adaptés pour exécuter un algorithme identique à celui qui a déjà été décrit ci-avant pour obtenir, à partir d'une image, une donnée de sécurité.

Le système de vérification comporte également un capteur d'images 32, typiquement un appareil photographique numérique. Il peut s'agir d'un appareil photographique intégré dans un téléphone mobile (smartphone) ou une tablette numérique.

Le système de vérification 3 est avantageusement intégré dans un boitier portatif de manière à pouvoir être déployé facilement lors d'un contrôle ; par exemple le système de vérification peut être intégré à un téléphone mobile, une tablette numérique, etc.

Le cas échéant, si la donnée de sécurité de référence est enregistrée dans la base de données 2, le système de vérification 3 comprend enfin une interface de communication 33 adaptée pour communiquer à distance avec l'unité de traitement gestionnaire 20 de la base de données 2, par exemple par Internet sans fil, signal radiofréquence, etc.

En référence à la figure 3, un procédé de vérification 200 de l'intégrité d'un document comprend une première étape 210 d'acquisition, avec le capteur d'images 32, d'une image de l'élément visuel du document dont on souhaite vérifier l'intégrité.

Puis, l'unité de traitement 30 exécute 220, à partir de cette image, le même algorithme que celui qui a été exécuté lors du procédé de sécurisation pour obtenir la donnée de sécurité de référence dᵣ, et elle obtient une nouvelle donnée de sécurité d.

Avantageusement, l'image acquise lors de l'étape 210 peut être traitée de la même manière que l'élément visuel avant de générer la nouvelle donnée de sécurité pour estomper les variations liées à la prise d'image. Ainsi l'image peut aussi être recalée et normalisée.

L'unité de traitement 30 récupère ensuite, auprès de la base de données 2 ou du document, la donnée de sécurité de référence dᵣ correspondant à l'élément visuel à vérifier.

Avantageusement, le procédé de vérification 200 comporte une étape 230 de vérification de l'intégrité de la donnée de sécurité de référence.

Si la donnée de sécurité de référence dᵣ a été signée par l'unité de traitement 10, l'unité de traitement 30 du système de vérification 3 vérifie au cours d'une étape 230 que la signature est valide en utilisant la clé publique associée à la clé privée utilisée lors de la signature.

Si la donnée de sécurité de référence est enregistrée avec un résultat r de l'application d'un algorithme secure sketch, l'intégrité de la donnée de référence est vérifiée lors d'une même étape 230 par l'unité de traitement 30. Pour ce faire l'unité de traitement 30 binarise la nouvelle donnée de sécurité d pour obtenir une donnée binarisée b'.

Elle calcule ensuite c XOR b XOR b' à partir de la donnée r. Si b et b' sont suffisamment proche alors cette opération fournit le mot de code c utilisé initialement par l'unité 10, grâce à la capacité correctrice du code correcteur et garantit donc l'intégrité de la donnée de sécurité de référence.

Si le résultat de l'étape 230 de vérification indique que la donnée de sécurité de référence n'est pas intègre, alors l'unité de traitement 30 détermine que le document est frauduleux.

Si le résultat de l'étape 230 de vérification indique que la donnée de sécurité de référence est intègre, alors l'unité de traitement 30 compare lors d'une étape 240 la nouvelle donnée de sécurité d à la donnée de sécurité de référence dᵣ, par le calcul entre ces données d'une fonction appropriée telle qu'une distance euclidienne, une distance de Hamming, etc, et compare le résultat à un seuil déterminé, qui correspond au seuil introduit ci-avant, et discriminant des images sensiblement identiques et des images sensiblement différentes.

Le procédé 200 comprend enfin une étape de détermination 250, en fonction du résultat de la comparaison, du caractère frauduleux ou non du document. Si les différences entre les deux données sont inférieures au seuil, le document est considéré intègre. Sinon, le document est considéré falsifié.

## Revendications

1. Procédé de sécurisation (100) d'un document comportant un élément visuel, mis en œuvre par une unité de traitement (10) comprenant des moyens de traitement (11), le procédé comprenant la génération (110), à partir d'une image de l'élément visuel, d'une donnée de sécurité de référence (dᵣ), et la mémorisation (120) de la donnée de sécurité de référence,
dans lequel la donnée de sécurité de référence (dᵣ) est générée au moyen d'un algorithme paramétré à partir d'un entraînement sur une base de données d'apprentissage,
dans lequel, pour l'entrainement de l'algorithme, l'algorithme est exécuté
sur un grand nombre de paires d'images, et des indications lui sont fournies sur celles qui doivent résulter en des données de sécurité sensiblement identiques,
sur d'autres paires d'images qui doivent résulter en des données de sécurité sensiblement différentes,
les paires d'images devant résulter en des données de sécurité sensiblement identiques étant des paires d'une même image capturée à des instants et/ou dans des conditions différentes,
les conditions différentes étant des conditions de détérioration par le temps, des frottements ou de jaunissement et/ou d'acquisition, de luminosité ou d'angle,
les paires d'images devant résulter en des données de sécurité sensiblement différentes étant des paires de deux images différentes soit d'individus différents, soit d'un même individu, une des images étant prise à des moments différents et/ou avec des conditions différentes,
l'algorithme étant un algorithme de classification employant un réseau de neurones convolutionnel.

2. Procédé de sécurisation (100) d'un document selon la revendication 1, dans lequel la génération (110) de la donnée de sécurité de référence (dᵣ) est mise en œuvre lors de la création du document.

3. Procédé de sécurisation (100) d'un document selon la revendication 1 ou 2, dans lequel la donnée de sécurité de référence est mémorisée (120) dans le document par affichage, par exemple impression, de la donnée sur le document ou par enregistrement de la donnée dans une puce électronique stockée dans le document.

4. Procédé de sécurisation (100) d'un document selon l'une des revendications 1 à 3, dans lequel la donnée de sécurité de référence (dᵣ) est mémorisée (120) en étant enregistrée dans une base de donnée (2).

5. Procédé de sécurisation (100) d'un document selon l'une quelconque des revendications 1 à 4, dans lequel la donnée de sécurité de référence (dᵣ) est mémorisée (120) dans le document par affichage, par exemple impression, de la donnée sur le document et dans lequel l'élément visuel est lui aussi affiché, par exemple imprimé sur le document.

6. Procédé de sécurisation (100) d'un document selon l'une quelconque des revendications 1 à 5, dans lequel le document est un document électronique comprenant préférablement des moyens d'affichage.

7. Procédé de sécurisation (100) d'un document selon l'une quelconque des revendications 3 à 6, dans lequel la donnée de sécurité de référence (dᵣ) est signée par l'unité de traitement (10), au moyen d'un algorithme de signature à clé publique, ou enregistrée avec un certificat d'authenticité obtenu par l'application d'un algorithme de codage basé sur l'utilisation d'un code correcteur d'erreur, dit secure sketch.

8. Procédé de sécurisation (100) d'un document selon l'une des revendications précédentes, dans lequel l'algorithme est choisi de sorte que la reconstitution de l'élément visuel à partir de la donnée de sécurité correspondante soit impossible.

9. Procédé de sécurisation (100) d'un document selon l'une des revendications précédentes, dans lequel ledit algorithme étant entrainé de manière à générer :
- pour toute image acquise de l'élément visuel, une donnée de sécurité dont les différences par rapport à la donnée de sécurité de référence sont inférieures à un seuil déterminé, et
- pour toute image acquise sur un élément visuel différent, une donnée de sécurité dont les différences par rapport à la donnée de sécurité de référence sont supérieures audit seuil.

10. Procédé de sécurisation (100) d'un document selon l'une quelconque des revendications précédentes, dans lequel l'élément visuel est une image du visage d'un individu, et l'algorithme est entrainé de manière à générer :
- pour toute image acquise de l'image du visage de l'individu figurant sur le document, une donnée de sécurité dont les différences par rapport à la donnée de sécurité de référence sont inférieures à un seuil déterminé, et
- pour toute image acquise d'une image représentant un autre individu, ou le même individu dans des conditions d'acquisition d'image différentes, une donnée de sécurité dont les différences par rapport à la donnée de sécurité de référence sont supérieures audit seuil.

11. Produit programme d'ordinateur, comprenant des instructions de code pour la mise en œuvre d'un procédé selon l'une des revendications précédentes, quand il est exécuté par des moyens de traitement (11) d'une unité de traitement (10).

12. Document sécurisé pouvant être obtenu par la mise en œuvre d'un procédé selon la revendication 3 où 5.

13. Procédé de vérification (200) de l'intégrité d'un document sécurisé par la mise en œuvre du procédé selon l'une des revendications 1 à 10, le procédé comprenant les étapes consistant à :
- acquérir une image (210) de l'élément visuel du document,
- générer (220), à partir de l'image, une donnée de sécurité (d) par le même algorithme que celui ayant permis de générer la donnée de sécurité de référence (dᵣ),
- comparer (240) la donnée de sécurité (d) obtenue à la donnée de sécurité de référence (dᵣ), et
- si les différences entre la donnée de sécurité (d) et la donnée de sécurité de référence (dᵣ) sont inférieures au seuil déterminé, déterminer (250) que l'élément visuel est intègre, sinon déterminer (250) que l'élément visuel est frauduleux,
dans lequel l'algorithme est paramétré à partir d'un entraînement sur une base de données d'apprentissage,
pour l'entrainement de l'algorithme, l'algorithme est exécuté
- sur un grand nombre de paires d'images, et des indications lui sont fournies sur celles qui doivent résulter en des données de sécurité sensiblement identiques,
- sur d'autres paires d'images qui doivent résulter en des données de sécurité sensiblement différentes,
- les paires d'images devant résulter en des données de sécurité sensiblement identiques étant des paires d'une même image capturée à des instants et/ou dans des conditions différentes,
- les conditions différentes étant des conditions de détérioration par le temps, des frottements ou de jaunissement et/ou d'acquisition, de luminosité ou d'angle,
- les paires d'images devant résulter en des données de sécurité sensiblement différentes étant des paires de deux images différentes soit d'individus différents, soit d'un même individu, une des images étant prise à des moments différents et/ou avec des conditions différentes,
- l'algorithme étant un algorithme de classification employant un réseau de neurones convolutionnel.

14. Procédé de vérification (200) selon la revendication 13, dans lequel le procédé comprend en outre, avant l'étape de comparaison, une étape de vérification (230) de l'intégrité de la donnée de sécurité de référence (dᵣ).

15. Système (3) de vérification d'un document, comprenant :
- un capteur d'image (32),
- une unité de traitement (30), comprenant des moyens de traitement (30) adaptés pour mettre en œuvre, sur une image acquise par le capteur, un algorithme de classification, et une interface de communication (33) avec une base de données (2),
- le système de vérification étant configuré pour mettre en œuvre le procédé selon l'une des revendications 13 ou 14.

## Patentansprüche

1. Verfahren zur Sicherung (100) eines Dokuments, das ein visuelles Element aufweist, implementiert durch eine Verarbeitungseinheit (10), die Verarbeitungsmittel (11) umfasst, wobei das Verfahren das Erzeugen (110), aus einem Bild des visuellen Elements, eines Referenzsicherheitsdatensatzes (dᵣ) und das Speichern (120) des Referenzsicherheitsdatensatzes umfasst,
wobei der Referenzsicherheitsdatensatz (dᵣ) mittels eines parametrierten Algorithmus aus einem Training auf einer Lerndatenbank erzeugt wird,
wobei, zum Training des Algorithmus, der Algorithmus auf einer großen Anzahl von Bildpaaren ausgeführt wird und ihm Hinweise gegeben werden, welche im Wesentlichen identische Sicherheitsdatendätze ergeben sollen, und
auf anderen Bildpaaren, die im Wesentlichen unterschiedliche Sicherheitsdatensätze ergeben sollen,
wobei die Bildpaare, die im Wesentlichen identische Sicherheitsdatensätze ergeben sollen, Paare desselben Bildes sind, das zu unterschiedlichen Zeitpunkten und/oder unter unterschiedlichen Bedingungen aufgenommen wurde,
wobei die unterschiedlichen Bedingungen Bedingungen der Verschlechterung durch Verschleiß, Reibung oder Vergilbung und/oder Erfassung, Helligkeit oder Winkel sind,
wobei die Bildpaare, die im Wesentlichen unterschiedliche Sicherheitsdatensätze ergeben sollen, Paare von zwei unterschiedlichen Bildern entweder unterschiedlicher Personen oder derselben Person sind, wobei eines der Bilder zu unterschiedlichen Zeitpunkten und/oder unter unterschiedlichen Bedingungen aufgenommen wird,
wobei der Algorithmus ein Klassifizierungsalgorithmus ist, der ein konvolutionales Neuronennetzwerk verwendet.

2. Verfahren zur Sicherung (100) eines Dokuments nach Anspruch 1, wobei das Erzeugen (110) des Referenzsicherheitsdatensatzes (dᵣ) bei der Erstellung des Dokuments implementiert wird.

3. Verfahren zur Sicherung (100) eines Dokuments nach Anspruch 1 oder 2, wobei der Referenzsicherheitsdatensatz in dem Dokument durch Anzeigen, beispielsweise Drucken, des Datensatzes auf dem Dokument oder durch Registrieren des Datensatzes in einem in dem Dokument gelagerten elektronischen Chip gespeichert (120) wird.

4. Verfahren zur Sicherung (100) eines Dokuments nach einem der Ansprüche 1 bis 3, wobei der Referenzsicherheitsdatensatz (dᵣ) gespeichert (120) wird, indem er in einer Datenbank (2) registriert wird.

5. Verfahren zur Sicherung (100) eines Dokuments nach einem der Ansprüche 1 bis 4, wobei der Referenzsicherheitsdatensatz (dᵣ) in dem Dokument durch Anzeigen, beispielsweise Drucken, des Datensatzes auf dem Dokument gespeichert (120) ist und wobei das visuelle Element ebenfalls angezeigt, beispielsweise auf dem Dokument gedruckt, wird.

6. Verfahren zur Sicherung (100) eines Dokuments nach einem der Ansprüche 1 bis 5, wobei das Dokument ein elektronisches Dokument ist, das vorzugsweise Anzeigemittel umfasst.

7. Verfahren zur Sicherung (100) eines Dokuments nach einem der Ansprüche 3 bis 6, wobei der Referenzsicherheitsdatensatz (dᵣ) von der Verarbeitungseinheit (10) mittels eines Signaturalgorithmus mit öffentlichem Schlüssel signiert oder mit einem Echtheitszertifikat registriert wird, das durch Anwendung eines auf der Verwendung eines Fehlerkorrekturcodes basierenden Kodierungsalgorithmus, dem Secure Sketch, erhalten wird.

8. Verfahren zur Sicherung (100) eines Dokuments nach einem der vorhergehenden Ansprüche, wobei der Algorithmus so gewählt ist, dass die Rekonstruktion des visuellen Elements aus dem entsprechenden Sicherheitsdatensatz unmöglich ist.

9. Verfahren zur Sicherung (100) eines Dokuments nach einem der vorhergehenden Ansprüche, wobei der Algorithmus so trainiert ist, dass er Folgendes erzeugt:
- für jedes erfasste Bild des visuellen Elements ein Sicherheitsdatensatz, dessen Abweichungen zu dem Referenzsicherheitsdatensatz unter einem bestimmten Schwellenwert liegen, und
- für jedes Bild, das auf einem anderen visuellen Element erfasst wird, ein Sicherheitsdatensatz, dessen Abweichungen zu dem Referenzsicherheitsdatensatz größer als dieser Schwellenwert sind.

10. Verfahren zur Sicherung (100) eines Dokuments nach einem der vorhergehenden Ansprüche, wobei das visuelle Element ein Gesichtsbild einer Person ist, und der Algorithmus so trainiert wird, dass er Folgendes erzeugt:
- für jedes erfasste Bild des Gesichtsbilds der Person, das auf dem Dokument enthalten ist, einen Sicherheitsdatensatz, dessen Abweichungen zu dem Referenzsicherheitsdatensatz unter einem bestimmten Schwellenwert liegen, und
- für jedes erfasste Bild eines Bildes, das eine andere Person oder dieselbe Person unter unterschiedlichen Bilderfassungsbedingungen darstellt, einen Sicherheitsdatensatz, dessen Abweichungen zu dem Referenzsicherheitsdatensatz größer als dieser Schwellenwert sind.

11. Computerprogrammprodukt, umfassend Codeanweisungen für die Implementierung eines Verfahrens nach einem der vorhergehenden Ansprüche, wenn es durch Verarbeitungsmittel (11) einer Verarbeitungseinheit (10) ausgeführt wird.

12. Gesichertes Dokument, das durch die Implementierung eines Verfahrens nach Anspruch 3 oder 5 erhalten werden kann.

13. Verfahren (200) zur Überprüfung der Integrität eines durch die Durchführung des Verfahrens nach einem der Ansprüche 1 bis 10 gesicherten Dokuments, wobei das Verfahren die Schritte umfasst, die aus Folgendem bestehen:
- Erfassen eines Bildes (210) des visuellen Elements des Dokuments,
- Erzeugen (220), ausgehend von dem Bild, eines Sicherheitsdatensatzes (d) durch denselben Algorithmus, mit dem der Referenzsicherheitsdatensatz (dᵣ) erzeugt werden konnte,
- Vergleichen (240) des erhaltenen Sicherheitsdatensatzes (d) mit dem Referenzsicherheitsdatensatz (dᵣ), und
- wenn die Abweichungen zwischen dem Sicherheitsdatensatz (d) und dem Referenzsicherheitsdatensatz (dᵣ) unter dem festgelegten Schwellenwert liegen, Bestimmen (250), dass das visuelle Element intakt ist, andernfalls Bestimmen (250), dass das visuelle Element gefälscht ist,
wobei der Algorithmus aus einem Training auf eine Lerndatenbank parametriert wird,
für das Algorithmustraining wird der Algorithmus ausgeführt
- auf einer großen Anzahl von Bildpaaren, und es werden ihm Angaben zu denjenigen gemacht, die im Wesentlichen identische Sicherheitsdatensätze ergeben sollen,
- auf anderen Bildpaaren, die im Wesentlichen unterschiedliche Sicherheitsdatensätze ergeben sollen,
- wobei die Bildpaare, die im Wesentlichen identische Sicherheitsdatensätze ergeben sollen, Paare desselben Bildes sind, das zu unterschiedlichen Zeitpunkten und/oder unter unterschiedlichen Bedingungen aufgenommen wurde,
- wobei die unterschiedlichen Bedingungen Bedingungen der Verschlechterung durch Verschleiß, Reibung oder Vergilbung und/oder Erfassung, Helligkeit oder Winkel sind,
- die Bildpaare, die im Wesentlichen unterschiedliche Sicherheitsdatensätze ergeben sollen, Paare von zwei unterschiedlichen Bildern entweder von unterschiedlichen Personen oder von derselben Person sind, wobei eines der Bilder zu unterschiedlichen Zeitpunkten und/oder unter unterschiedlichen Bedingungen aufgenommen wird,
- wobei der Algorithmus ein Klassifizierungsalgorithmus ist, der ein konvolutionales Neuronennetzwerk verwendet.

14. Verfahren (200) zur Überprüfung nach Anspruch 13, wobei das Verfahren ferner, vor dem Schritts des Vergleichens, einen Schritt des Überprüfens (230) der Integrität des Referenzsicherheitsdatensatzes (dᵣ) umfasst.

15. System (3) zur Überprüfung eines Dokuments, umfassend:
- einen Bildsensor (32),
- eine Verarbeitungseinheit (30), die Verarbeitungsmittel (30) umfasst, die geeignet sind, auf einem von dem Sensor erfassten Bild einen Klassifizierungsalgorithmus und eine Kommunikationsschnittstelle (33) mit einer Datenbank (2) zu implementieren,
- wobei das System zur Überprüfung so konfiguriert ist, dass es das Verfahren nach einem der Ansprüche 13 oder 14 implementiert.

## Claims

1. Method (100) for protecting a document including a visual element, implemented by a processing unit (10) comprising processing means (11), the method comprising generating (110), from an image of the visual element, a reference security data item (dᵣ), and storing (120) the reference security data item,
wherein the reference safety data item (dᵣ) is generated by means of an algorithm configured from training on a learning database,
wherein, for training the algorithm, the algorithm is executed on a large number of image pairs, and indications are provided to it on those which must result in substantially identical security data,
on other image pairs which must result in substantially different security data,
the image pairs which must result in substantially identical security data being pairs of the same image captured at different times and/or under different conditions,
the different conditions being conditions of deterioration over time, friction or yellowing and/or acquisition, brightness or angle,
the image pairs which must result in substantially different security data being pairs of two different images of either different individuals or of the same individual, one of the images being taken at different times and/or with different conditions,
the algorithm being a classification algorithm employing a convolutional neural network.

2. Method for protecting (100) a document according to claim 1, wherein generating (110) the reference security data item (dᵣ ) is implemented during the creation of the document.

3. Method (100) for protecting a document according to claim 1 or 2, wherein the reference security data item is stored (120) in the document by displaying, for example printing, the data item on the document or by saving the data item in an electronic chip stored in the document.

4. Method (100) for protecting a document according to one of claims 1 to 3, wherein the reference security data item (dᵣ) is stored (120) by being recorded in a database (2).

5. Method (100) for protecting a document according to any one of claims 1 to 4, wherein the reference security data item (dᵣ ) is stored (120) in the document by displaying, for example printing, the data item on the document and wherein the visual element is also displayed, for example printed on the document.

6. Method (100) for protecting a document according to any one of claims 1 to 5, wherein the document is an electronic document preferably comprising display means.

7. Method (100) for protecting a document according to any one of claims 3 to 6, wherein the reference security data item (dᵣ) is signed by the processing unit (10), by means of a public key signature algorithm, or recorded with an authenticity certificate obtained by applying an encoding algorithm based on the use of an error correcting code, so-called secure sketch.

8. Method (100) for protecting a document according to one of the preceding claims, wherein the algorithm is selected such that reconstituting the visual element from the corresponding security data item is impossible.

9. Method (100) for protecting a document according to one of the preceding claims, wherein said algorithm is trained so as to generate:
- for any acquired image of the visual element, a safety data item the differences of which with respect to the reference safety data item are less than a determined threshold, and
- for any image acquired on a different visual element, a safety data item the differences which with respect to the reference safety data item are greater than said threshold.

10. Method (100) for protecting a document according to any one of the preceding claims, wherein the visual element is an image of a face of an individual, and the algorithm is trained so as to generate:
- for any acquired image of the image of the face of the individual appearing on the document, a security data item the differences of which with respect to the reference security data item are less than a certain threshold, and
- for any image acquired of an image representing another individual, or the same individual under different image acquisition conditions, a security data item the differences of which with respect to the reference security data item are greater than said threshold.

11. Computer program product, comprising code instructions for implementing a method according to one of the preceding claims, when it is executed by processing means (11) of a processing unit (10).

12. Secure document that can be obtained by implementing a method according to claim 3 or 5.

13. Method (200) for verifying the integrity of a document protected by implementing the method according to one of claims 1 to 10, the method comprising the steps of:
- acquiring an image (210) of the visual element of the document,
- generating (220), from the image, a security data item (d) by the same algorithm as that used to generate the reference security data item (dᵣ),
- comparing (240) the safety data (d) obtained with the reference safety data item (dᵣ), and
- if the differences between the safety data item (d) and the reference safety data item (dᵣ) are less than the threshold determined, determining (250) that the visual element is trustworthy, otherwise determining (250) that the visual element is fraudulent,
wherein the algorithm is parameterised using training on a learning database,
for training the algorithm, the algorithm is executed
- on a large number of pairs of images, and indications are provided on those which must result in substantially identical safety data,
- on other pairs of images which must result in substantially different security data,
- the pairs of images which must result in substantially identical security data being pairs of the same image captured at different times and/or under different conditions,
- the different conditions being conditions of deterioration over time, friction or yellowing and/or acquisition, brightness or angle,
- the pairs of images which must result in substantially different security data being pairs of two different images of either different individuals, or of the same individual, one of the images being taken at different times and/or with different conditions,
- the algorithm being a classification algorithm employing a convolutional neural network.

14. Verification method (200) according to claim 13, wherein the method further comprises, prior to the comparison step, a step of verifying (230) the integrity of the reference safety data item (dᵣ ).

15. System (3) for verifying a document, comprising:
- an image sensor (32),
- a processing unit (30), comprising processing means (30) adapted to implement, on an image acquired by the sensor, a classification algorithm, and an interface (33) for communicating with a database (2),
- the verification system being configured to implement the method according to one of claims 13 or 14.
